# EUROPEAN PATENT SPECIFICATION

(11) **EP 4 403 651 B1**
(45) Date of publication and mention of the grant of the patent: **19.08.2026**
(21) Application number: 22907039.6
(22) Date of filing: 26.10.2022
(51) Int. Cl.: C21C 5/52, C21B 11/10, F27D 3/00, F27D 3/04, F27D 17/00, F27B 3/18, F27B 3/20, F27D 17/18, C21C 5/56, F27B 3/08, F27D 13/00, F27D 17/30, F27D 19/00

(54) **METHOD OF PRODUCING MOLTEN IRON**
VERFAHREN ZUR HERSTELLUNG VON GESCHMOLZENEM EISEN
PROCÉDÉ DE PRODUCTION DE FER FONDU

(30) Priority: 13.12.2021 JP 2021202068
(43) Date of publication of application: 24.07.2024
(73) Proprietor: JFE Steel Corporation, Tokyo 100-0011 (JP)
(72) Inventor: TSUTSUMI, Koichi, Tokyo 100-0011 (JP); MIWA, Yoshihiro, Tokyo 100-0011 (JP); TAKADA, Yosuke, Tokyo 100-0011 (JP); TODO, Wataru, Tokyo 100-0011 (JP); OZAWA, Sumito, Tokyo 100-0011 (JP); KIJIMA, Hideo, Tokyo 100-0011 (JP)
(74) Representative: Grünecker Patent- und Rechtsanwälte PartG mbB
(86) International application number: PCT/JP2022/040024
(87) International publication number: WO 2023/112505

(56) References cited:
- JP-A- 2021 046 608
- JP-A- 2021 046 608
- JP-A- H04 273 991
- JP-A- H09 159 377
- JP-A- H11 100 610

## Description

### TECHNICAL FIELD

This disclosure relates to a method of efficiently melting a cold iron source to produce molten iron in an electric furnace having a preheating chamber and a melting chamber.

### BACKGROUND

In the production of molten iron using an electric furnace, a large amount of electric power is consumed to generate arc heat because molten iron is obtained by melting a cold iron source such as scrap with arc heat. Conventionally, to reduce electric power consumption in electric furnaces, the following methods have been used: a method of preheating a cold iron source before melting using a burner with fossil fuels; a method of preheating a cold iron source before melting using a high temperature exhaust gas generated during the previous melting of the cold iron source; a method of blowing coke as an auxiliary heat source into a cold iron source during melting; and other methods.

For example, Patent Literature (PTL) 1 discloses a technique for melting a cold iron source in a melting chamber by arc in an electric furnace in which a preheating shaft is directly connected above the melting chamber, while continuously or intermittently supplying the cold iron source to the preheating shaft so that the cold iron source remains continuously present in the melting chamber and the preheating shaft. In the technique of PTL 1, an electric furnace that does not require any particular device for transporting and supplying the cold iron source to the melting chamber is used to efficiently melt the cold iron source by preheating the cold iron source with a high temperature exhaust gas into the molten iron.

In addition, PTL 2 discloses a technique for preheating scrap to a predetermined temperature in a steelmaking facility where an electric furnace and a scrap preheater are separated by a bypass pipeline, where the amount of an exhaust gas to be fed to the scrap preheater is determined while measuring the temperature of the exhaust gas at the inlet side to the scrap preheater, and the amount of supply of the exhaust gas is controlled by the fan speed.

Furthermore, PTL 3 discloses preheating scrap in an equipment configuration having a duct that charges an exhaust gas from an electric furnace into a preheating tank containing scrap, where the temperatures of the exhaust gas at the inlet and outlet sides of the preheating tank is measured and the opening and closing of a damper is controlled according to the temperatures in order to protect the preheating tank and prevent melting of the scrap.

Documents JP2021046608 and JPH11100610 are further examples of methods of producing molten iron in an electric furnace having a preheating chamber and a melting chamber, including a preheating confirmation step.

### CITATION LIST

### Patent Literature

PTL 1: JPH10292990A
PTL 2: JPS5743191A
PTL 3: JPH04273991A

### SUMMARY

### (Technical Problem)

The technique disclosed in PTL 1 basically supplies the cold iron source continuously into the melting chamber while gradually melting it by preheating the cold iron source with the exhaust gas and by its own weight. However, although the concept of continuously or intermittently supplying a cold iron source from a preheating chamber to a melting chamber is disclosed in PTL 1, there is no disclosure of specific control indicators for the supply of the cold iron source. As a result of study, the inventors found that, in practice, unintended situations may occur in a path from the preheating shaft to the melting chamber, for example, the cold iron source may be excessively preheated and remain as a large lump, or the cold iron source may be supplied to the melting chamber with insufficient preheating. However, it was also found that PTL 1 could not ascertain such excessive or insufficient preheating of the cold iron source, and that cases of excessive or insufficient preheating of the cold iron source could result in higher electric power consumption in the electric furnace. Therefore, there is a need for a means by which the preheating state of the cold iron source can be ascertained.

The technique disclosed in PTL 2 changes and controls in advance the amount of exhaust gas itself for scrap preheating while measuring the temperature of the exhaust gas at the inlet side of the scrap preheating device, which is located at a distance from the electric furnace. However, as a result of study, the inventors found that, in practice, the scrap in the scrap preheater was not preheated to the calculated temperature, and this also may increase the electric power consumption in the electric furnace. Even in PTL 2, it is not possible to ascertain such actual excessive or insufficient preheating of scrap, and there is a need for a means by which the preheating state of the scrap can be ascertained.

Furthermore, the technique disclosed in PTL 3 preheats scrap by introducing the exhaust gas discharged from the electric furnace directly into the preheating furnace via the duct and controlling the exhaust gas with a damper. However, the technique disclosed in PTL 3, from the viewpoint of protecting the preheating tank and preventing melting of the scrap, focuses on keeping the temperatures of both of the preheating tank and the scrap to setting values or less. Thus, the preheating of scrap in particular may be insufficient, and it is necessary to precisely ascertain the preheating state of the scrap.

This disclosure was made in view of the above circumstances. It could be helpful to provide a method of producing molten iron by an electric furnace, which can obtain molten iron with a low electric power consumption rate by efficiently and reliably preheating a cold iron source by ascertaining the preheating state of the cold iron source.

### (Solution to Problem)

The inventors studied a method that can solve the above problem. As a result, the inventors conceived of providing a method (preheating confirmation step) to confirm after the fact that the cold iron source has actually been preheated to a predetermined temperature by the exhaust gas, instead of directly and in advance controlling the conditions for preheating the cold iron source by the exhaust gas. The inventors then found that providing the preheating confirmation step and a supply step of supplying the preheated iron source confirmed in the preheating confirmation step to the melting chamber can effectively transfer the sensible heat of the exhaust gas to the cold iron source and effectively reduce the electric power consumption rate, an index of the energy used in the electric furnace.

This disclosure was made based on the above discoveries and the main features are described in independent claim 1 and dependent claims 2-4.

### (Advantageous Effect)

According to this disclosure, in the method of producing molten iron, in which the cold iron source is preheated in the preheating chamber using the exhaust gas to form a preheated iron source, and the preheated iron source is supplied to the melting chamber, it is possible to effectively reduce the electric power consumption rate, which is a major indicator of the energy used in the electric furnace by ascertaining the preheating state of the cold iron source and efficiently and reliably preheating the cold iron source, for example, by shortening the melting time per charge until steel is tapped.

### BRIEF DESCRIPTION OF THE DRAWINGS

In the accompanying drawings:

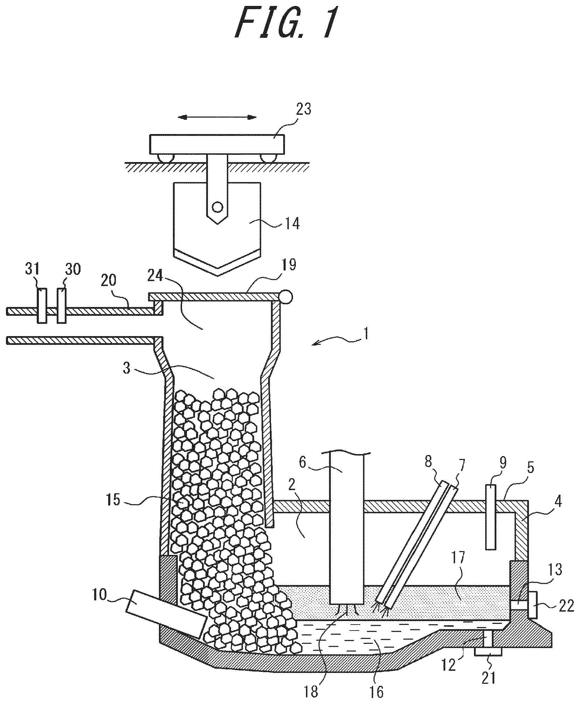

FIG. 1 is a schematic diagram of a longitudinal section of an electric furnace in which an embodiment of this disclosure can be implemented.

### DETAILED DESCRIPTION

Embodiments of the present disclosure will be specifically described below. The following embodiments provide preferred examples of this disclosure, and this disclosure is by no means limited to these examples.

### (Method of producing molten iron)

A method of producing molten iron of this disclosure is a method using an electric furnace having a predetermined structure, including: a cold iron source feeding step of feeding a cold iron source into a preheating chamber; a cold iron source preheating step of preheating the cold iron source fed in the cold iron source feeding step to a predetermined temperature by an exhaust gas generated in a melting chamber to form a preheated iron source; a supply step of supplying the preheated iron source to the melting chamber; a melting step of melting the preheated iron source fed into the melting chamber in the supply step by arc heating; and optionally other steps. In particular, the above cold iron source preheating step further has a preheating confirmation step to confirm that the cold iron source is a preheated iron source that has been preheated to the predetermined temperature. In the subsequent supply step, the preheated iron source that has been confirmed to be preheated to the predetermined temperature is supplied to the melting chamber.

By further having the preheating confirmation step and the subsequent supply step, the production method of this disclosure can immediately supply the preheated iron source into the melting chamber after confirming that the cold iron source has actually become a preheated iron source that has been preheated to the predetermined temperature. This can avoid excessive preheating of the cold iron source and supplying of the cold iron source to the melting chamber with insufficient preheating. Therefore, according to the production method of this disclosure, the sensible heat of the exhaust gas can be effectively transferred to the cold iron source while ensuring preheating of the cold iron source by the exhaust ga. As a result, molten iron can be produced by effectively reducing the electric power consumption rate in the electric furnace.

### [Electric furnace]

The following is a detailed description of an electric furnace in which this disclosure can be suitably used, with reference to the figure. The electric furnace illustrated in the figure is a suitable example, and it goes without saying that any electric furnace having a melting chamber and a preheating chamber into which the exhaust gas from the melting chamber can be introduced is applicable.

An electric furnace 1 illustrated in FIG. 1 includes: a melting chamber 2 in which a preheated iron source obtained by preheating a cold iron source 15 is melted by heat from an arc 18 to obtain molten iron 16; a preheating chamber 3 that rises vertically above the melting chamber 2 and preheats the cold iron source 15 to supply the obtained preheated iron source to the melting chamber 2 by, for example, an extruder 10; and a duct 20 through which an exhaust gas 24 generated in the melting chamber 2 flows. The electric furnace 1 further includes a thermometer 30 and a flowmeter 31, which are installed at arbitrary locations, preferably in the path of the duct 20. By installing the thermometer 30 and the flowmeter 31 in the pass of the duct 20, it is possible to measure in a timely manner the temperature and flow rate of the exhaust gas 24 after flowing through the cold iron source 15 and being used to preheat the cold iron source 15.

The cold iron source 15 to be raw material is loaded into a supply bucket 14 and then transported via a traveling cart 23 to above a desired cold iron source supply port 19. Next, the cold iron source supply port 19 is opened to supply the cold iron source 15 from above to the preheating chamber 3.

The cold iron source 15 supplied to the preheating chamber 3 is preheated using the exhaust gas generated in the melting chamber 2 as described above to be a preheated iron source. For example, if the high heat exhaust gas 24 previously generated in the melting chamber 2 is passed directly through the preheating chamber 3 (without passing through the piping that connects the melting chamber 2 to the preheating chamber 3) to preheat the cold iron source 15, the production efficiency can be increased. The exhaust gas may then be suctioned by the duct 20 and passed through the preheating chamber 3, and excess exhaust gas may be exhausted through the duct 20.

The preheated iron source obtained by preheating the cold iron source 15 to a predetermined temperature can be continuously supplied to the melting chamber 2 by the extruder 10 in the case of the electric furnace 1 illustrated in FIG. 1. The extruder 10 continues to extrude the preheated iron source in the preheating chamber 3 to the melting chamber 2 by repeatedly moving its tip back and forth toward the melting chamber 2 side. The amount of supply and timing of supply of the preheated iron source to the melting chamber 2 by the extruder 10 can be adjusted, for example, depending on the time interval (extrusion interval) at which the extruder 10 is moved and/or the amount of movement of the extruder 10. A shorter extrusion interval can promote the supply of the preheated iron source, while a longer extrusion interval can reduce the supply of the preheated iron source. A larger amount of movement of the extruder 10 can promote the supply of the preheated iron source, while a smaller amount of movement of the extruder 10 can reduce the supply of the preheated iron source.

From the viewpoint of operational efficiency, it is usual that such extrusion interval and amount of movement are set initially to certain values and automatic operation is then performed. However, this disclosure has the preheating confirmation step. Thus, the supply schedule of the preheated iron source to the melting chamber 2 can be effectively controlled, depending on the result of the confirmation of whether the cold iron source 15 is a preheated iron source that has been preheated to the predetermined temperature. As an example, as described in detail later, the amount of change in amount of sensible heat of the exhaust gas can be monitored, the preheating confirmation step can be performed based on the monitoring results, and the operating conditions of the extruder 10 can be simultaneously controlled. The extruder 10 usually has a cylinder structure.

Alternatively, although not illustrated, in a case using an electric furnace in which the preheating chamber extends vertically above the melting chamber and horizontally, the preheated iron source confirmed in the preheating confirmation step can be transported by a belt conveyor that can run in the preheating chamber toward the direction of the melting chamber, and the preheated iron source can be supplied to the melting chamber by free fall from the belt conveyor. In this case, the timing of supply of the preheated iron source to the melting chamber can be controlled by controlling the moving speed of the belt conveyor. A higher moving speed of the belt conveyor can promote the supply of the preheated iron source, while a lower moving speed of the belt conveyor can reduce the supply of the preheated iron source.

From the viewpoint of operational efficiency, it is also usual that the moving speed of the belt conveyor is set initially to a certain value and automatic operation is then performed. However, this disclosure has the preheating confirmation step. Thus, as another example, the amount of change in amount of sensible heat of the exhaust gas can be monitored, the preheating confirmation step can be performed based on the monitoring results, and the operating conditions of the belt conveyor can be simultaneously controlled depending on the result of the confirmation of whether the cold iron source is a preheated iron source that has been preheated to the predetermined temperature.

Returning to FIG. 1, the melting chamber 2 is defined by a furnace wall 4 and a furnace lid 5 and usually includes an electrode 6 for heating by generating arc 18, an oxygen blowing lance 7 and a carbon material blowing lance 8 for maintaining a desired high temperature state, and a burner 9 for locally heating a low temperature area. The preheated iron source supplied to the melting chamber 2 is melted by arc heat to be molten iron 16 and molten slag 17. The obtained molten iron 16 can be tapped from a tapping hole 12 by opening a tapping door 21. The molten slag 17 can be removed from a slag hole 13 by opening a slag door 22.

The cold iron source 15 usually includes, but is not limited to, self-shredded scrap generated at steel plants, scrap generated in town, pig iron obtained by solidifying hot metal, and reduced iron. Examples of the self-shredded scrap generated at steel plants include non-stationary parts (parts at the start of casting or at the end of casting) of cast steel cast by continuous casting or ingot casting, and crops generated in the rolling of the steel material such as a steel strip. The scrap generated in town includes recycled materials such as construction steel materials (e.g., H-shaped steel), automotive steel materials, and cans. The pig iron obtained by solidifying hot metal is obtained by tapping out and solidify the hot metal obtained using iron ore and coke as raw materials in a smelting furnace such as a blast furnace. The reduced iron is a raw material that is a source of iron obtained by direct reduction of iron ore with a reducing gas such as a natural gas.

The thermometer 30 can use any measurement method as long as the thermometer 30 can measure the correct temperature of the exhaust gas 24. However, a thermometer 30 that measures the temperature with a thermocouple is generally preferred. The thermometer 30 can be installed at any location, such as on the wall surface of the preheating chamber 3 or on the wall surface of the duct 20. However, it is preferable to install the thermometer 30 behind the exhaust gas 24 having passed through the cold iron source 15 (and possibly the preheated iron source).

This is because the temperature measured at the location where the thermometer is installed upstream of preheating may indicate a temperature including both of the sensible heat of the exhaust gas, which is required for a step for confirmation in this disclosure and the radiation heat directly transferred from the molten steel. Therefore, measuring the temperature downstream of the preheating section will correctly indicate the amount of sensible heat of the exhaust gas. Accordingly, by installing the thermometer 30 downstream of the exhaust gas 24 with respect to the cold iron source 15, the transfer of the sensible heat of the exhaust gas 24 to the cold iron source 15 can be well ascertained.

In the case of the electric furnace 1 illustrated in FIG. 1, suitable candidate locations for installing the thermometer 30 include the wall surface of the upper portion of the preheating chamber 3 above the top surface of the stack of the cold iron source 15, or the downstream rearward toward which the exhaust gas 24 flows with respect to the connection between the preheating chamber 3 and the duct 20 illustrated in FIG. 1. In the former position, the measured value may change as the cold iron source 15 is fed into the preheating chamber 3. Therefore, the latter position is more preferable because it is possible to measure the temperature to confirm the amount of sensible heat of the summarized exhaust gas and the amount of change thereof.

In the case of an electric furnace with a preheating chamber extending horizontally, as a suitable candidate location for installing a thermometer, the thermometer is desirably installed downstream of the preheating chamber. This is because the case where the thermometer is installed at the side near the melting chamber may inevitably cause the temperature to contain temperature fluctuations due to direct radiation from the molten steel in addition to the temperature of the exhaust gas, as in the case of an electric furnace with a preheating chamber extending vertically.

From the viewpoint of increasing the responsiveness, when a thermocouple is used, as an installation form of the thermocouple, the thermocouple is preferably installed such that its tip is directly in contact with the exhaust gas. However, the reducing gas may accelerate corrosion of the thermocouple tip, and there are concerns that the frequency of replacement may increase, and the accuracy of temperature measurement may be inferior. Therefore, the thermocouple itself may be used entirely covered with a protective tube such as alumina. However, in this case, in order to improve the accuracy of temperature measurement, management just have to be performed by ascertaining the responsiveness in the state covered with the protective tube in advance and ascertaining and adjusting the difference in measurement temperature, etc. that may occur. The data taken from the thermometer 30 is connected and transmitted generally via a compensation lead wire (not illustrated) to a predetermined location, for example, to a monitor or a recording device (both not illustrated) in an operation room, which is operated by an operator.

Like the thermometer 30, the flowmeter 31 can use any measurement method as long as the flowmeter 31 can measure the correct flow rate of the exhaust gas 24. When the flow rate of the exhaust gas is intended to be measured from the time of construction of the electric furnace 1, one of the candidates of a suitable measurement means is a Venturi tube system, in which, for example, a throttling mechanism is installed in the duct 20, a plurality of pressure gauges are installed at sites having different cross-sectional areas of the duct 20, the flow velocity of the exhaust gas is calculated from the pressures measured by those pressure gauges, and the flow rate of the exhaust gas can be calculate from the flow velocity. Another measurement means is, for example, a method of installing a pitot tube in the duct 20, measuring both static and dynamic pressures, calculating the flow velocity of the exhaust gas from those pressures, and multiplying the flow velocity by the cross-sectional area of the duct 20 to convert it to the flow rate of the exhaust gas.

Like the thermometer 30, the flowmeter 31 can be installed at any location, such as on the wall surface of the preheating chamber 3 or on the wall surface of the duct 20. From the viewpoints of well ascertaining the transfer of the sensible heat of the exhaust gas 24 to the cold iron source 15 and avoiding the influence of change in measured value caused by the feeding of the cold iron source 15 into the preheating chamber 3, in the case of the electric furnace 1 illustrated in FIG. 1, it is preferable to install the flowmeter 31 on the downstream rearward toward which the exhaust gas 24 flows with respect to the top surface of the tower of the cold iron source 15 stacked in the preheating chamber 3.

In the case of an electric furnace with a preheating chamber extending horizontally, as a suitable candidate location for installing a thermometer, the thermometer is desirably installed downstream of the preheating chamber. This is because the case where the thermometer is installed at the side near the melting chamber may inevitably cause the temperature to contain temperature fluctuations due to direct radiation from the molten steel in addition to the temperature of the exhaust gas, as in the case of an electric furnace with a preheating chamber extending vertically.

In the measurement of the flow rate, when the pressure is measured with a pitot tube or the like, there is a problem that the correct pressure cannot be measured if foreign substances get into the tube. Therefore, it is necessary to prevent clogging of the tube by cleaning the tube at an appropriate frequency or by providing a mechanism (not illustrated) to purge the foreign substances in the tube with air or the like at regular intervals. In this case, the purge will cause a slight timing when the flow rate cannot be measured. However, the flow rate of the exhaust gas at the timing can be calculated using the number immediately before the purge. The data taken from the flowmeter 31, as in the case of the thermometer 30, is connected and transmitted via a compensation lead wire (not illustrated) to a predetermined location, for example, to a monitor or a recording device (both not illustrated) in an operation room, which is operated by an operator.

### [Cold iron source feeding step]

In the cold iron source feeding step, the cold iron source is fed into the preheating chamber. The above mentioned traveling cart 23, supply bucket 14, and cold iron source supply port 19 can be suitably used for the cold iron source feeding step. The amount of cold iron source to be fed can be determined as appropriate, according to the specifications of the electric furnace to be used, the target amount of molten iron to be produced, etc.

When continuous operation is performed by feeding the cold iron source in multiple times and/or when continuous operation is performed over multiple charges, the amount of the cold iron source to be fed at a certain timing can be determined based on the capacity of the preheating chamber, target amount of molten iron to be produced, etc., because the molten iron obtained in the previous melting step has already accumulated in the melting chamber. On the other hand, when operating a charge for the first time, the melting chamber is empty, so the cold iron source can be supplied so that the cold iron source is present in both of the melting chamber and the preheating chamber.

### [Cold iron source preheating step]

In the cold iron source preheating step, the cold iron source in the preheating chamber, which has been fed in the cold iron source feeding step, is preheated to a predetermined temperature by the exhaust gas generated in the melting chamber to be a preheated iron source. The above mentioned exhaust gas 24 and duct 20 can be suitably used for the cold iron source preheating step.

Here, in the cold iron source preheating step, it is integral to perform a preheating confirmation step to confirm that the cold iron source is a preheated iron source that has been preheated to the predetermined temperature.

### [[Preheating confirmation step]]

The preheating confirmation step confirms that the cold iron source is a preheated iron source that has been preheated to the predetermined temperature. That is, in the preheating confirmation step, the preheating conditions are not changed in advance prior to obtaining the preheated iron source, and the confirmation that the preheated iron source has actually been obtained is performed after the fact. By confirming after the fact that the preheated iron source has actually been obtained, both of excessive and insufficient preheating of the cold iron source can be reliably avoided, which enables efficient preheating of the cold iron source, thereby reducing the electric power consumption rate required to produce the molten iron. The above mentioned thermometer 30 and flowmeter 31 can be suitably used for the preheating confirmation step.

The confirmation that the cold iron source is a preheated iron source that has been preheated to the predetermined temperature can be suitably implemented based on the amount of change in amount of sensible heat of the exhaust gas. In particular, this confirmation can be more suitably implemented based on the amount of change in amount of sensible heat of the exhaust gas after being used to preheat the cold iron source, starting from the feeding timing of the cold iron source. The confirmation of the amount of change in amount of sensible heat of the exhaust gas after being used to preheat the cold iron source can be implemented, for example, by providing the thermometer 30 and the flowmeter 31 at the suitable installation locations described above. That is, the amount of change in amount of sensible heat of the exhaust gas after being used to preheat the cold iron source is a parameter that corresponds to the amount of heat imparted to the cold iron source by the exhaust gas (which cannot be ascertained by simply measuring the exhaust gas temperature alone) and is therefore optimal for reliably confirming that the preheated iron source has reached its preheating temperature.

### Calculation of amount of change in amount of sensible heat of exhaust gas

The following is a specific description of a method of calculating the amount of change in amount of sensible heat of the exhaust gas, which can be suitably referred to in the preheating confirmation step. An amount of change ΔQ in amount of sensible heat of the exhaust gas can be calculated according to the following formulas (1) and (2) from a temperature T of the exhaust gas and a flow rate F of the exhaust gas, which are continuously measured, for example, using the above mentioned thermometer 30 and flowmeter 31, and a weight W of the cold iron source fed into the preheating chamber: $ΔQ = \left|{Q}_{1}-{Q}_{N}\right| ;$ ${Q}_{1} = \left(c\times {F}_{1}\times {T}_{1}\right) / {W}_{1} ;$ and ${Q}_{N} = \left(c\times {F}_{N}\times {T}_{N}\right) / {W}_{N}$ wherein
ΔQ is an amount of change in amount of sensible heat of the exhaust gas [kJ/(sec•t)];
Q₁ is an amount of sensible heat of the exhaust gas at the timing when the cold iron source is fed into the preheating chamber [kJ/(sec•t)];
Q_{N} is an amount of sensible heat of the exhaust gas at any timing N after the timing when the cold iron source is fed into the preheating chamber, which is continuously calculated [kJ/(sec•t)];
c is a specific heat of the exhaust gas [kJ/(m³•°C)];
F₁ is a flow rate of the exhaust gas at the timing when the cold iron source is fed into the preheating chamber [m³/sec];
F_{N} is a flow rate of the exhaust gas at any timing N after the timing when the cold iron source is fed into the preheating chamber, which is continuously measured [m³/sec];
T₁ is a temperature of the exhaust gas at the timing when the cold iron source is fed into the preheating chamber [°C].
T_{N} is a temperature of the exhaust gas any timing N after the timing when the cold iron source is fed into the preheating chamber, which is continuously measured [°C];
W₁ is a weight of the cold iron source in the preheating chamber at the timing when the cold iron source is fed into the preheating chamber [t]; and
W_{N} is a weight of the cold iron source in the preheating chamber at any timing N after the timing when the cold iron source is fed into the preheating chamber [t].

The amount of change ΔQ in amount of sensible heat of the exhaust gas can be calculated, for example, in the following manner. That is, using the flow rate F₁ of the exhaust gas, the temperature T₁ of the exhaust gas, and the weight W₁ of the cold iron source in the preheating chamber, which are measured at the timing when the cold iron source is fed into the preheating chamber, and the specific heat c of the exhaust gas, the amount of sensible heat Q₁ of the exhaust gas at the timing when the cold iron source is fed into the preheating chamber is first determined. Then, while the cold iron source preheating step is performed, the above parameters F_{2, 3,} ... _{N}; T_{2, 3,} ... _{N}; and W_{2, 3,} ... _{N}; at any respective timings 2, 3, ... N are continuously measured to continuously obtain Q_{2, 3, ... N} at the respective timings. The obtained Q₁ and Q_{2, 3,} ... _{N} are applied to the above formula (1) to obtain the amount of change ΔQ in amount of sensible heat of the exhaust gas at each timing starting from the timing when the cold iron source is fed.

When the flow rate of the exhaust gas through the duct is calculated, the flow rate of the exhaust gas per unit time can be determined by multiplying the cross-sectional area of the duct by the flow velocity of the exhaust gas, which is calculated from the pressure of the flowmeter. $F = v \times S$ wherein
v is a flow velocity of the exhaust gas [m/sec]; and
S is a duct area through which the exhaust gas passes [m²].

In one embodiment of this disclosure, by continuously measuring the temperature T of the exhaust gas and the flow velocity v of the exhaust gas, the flow rate F of the exhaust gas can also be continuously measured according to the above formula (2), so the amount of change ΔQ in amount of sensible heat of the exhaust gas (kJ/(sec•t)) can also be continuously calculated according to the above formula (1).

### Determination of completion of preheating of cold iron source

The following is one example of a criterion for confirming in the preheating confirmation step that the cold iron source is a preheated iron source that has been preheated to the predetermined temperature, i.e., that the preheating of the cold iron source is completed. That is, the amount of sensible heat Q of the exhaust gas is reduced by transferring heat to the cold iron source in the preheating chamber for preheating. Accordingly, the amount of change ΔQ in amount of sensible heat of the exhaust gas from the timing when the cold iron source is fed increases as the cold iron source is preheated. When the inventors studied diligently and found that if the amount of change ΔQ in amount of sensible heat of the exhaust gas calculated as above is 700 kJ/(sec•t) or more, the temperature rise to the cold iron source is around 250 °C or more, so it can be determined that the cold iron source in the preheating chamber has been sufficiently preheated. The amount of change ΔQ in amount of sensible heat is preferably 800 kJ/(sec•t) or more, and more preferably 1000 kJ/(sec•t).

On the other hand, if the cold iron source in the preheating chamber is excessively preheated, the cold iron source may melt excessively in the preheating chamber to form a large lump, which may cause poor exhaust gas permeability and obstruction of the supply to the melting chamber, resulting in problems in electric furnace operation. Excessive preheating of the cold iron source is also likely to lead to excessive consumption of the energy to be used. From these viewpoints, the amount of change ΔQ in amount of sensible heat is preferably 1200 kJ/(sec•t) or less.

### [Supply step]

In the supply step, the preheated iron source that has been confirmed to be preheated to the predetermined temperature in the preheating confirmation step is supplied to the melting chamber. The above mentioned extruder 10 or a belt conveyor (not illustrated) can be suitably used for the supply step.

The amount of supply and timing of supply of the cold iron source 15 are controlled by the amount of movement of the extruder 10 per extrusion and the time interval (extrusion interval) at which the extruder 10 is moved, in the case of an electric furnace in which the preheating chamber rises along the vertical direction. Alternatively, the amount of supply and timing of supply of the cold iron source 15 are controlled by the moving speed of the belt conveyor, in the case of an electric furnace in which the preheating chamber is primarily arranged horizontally. In the normal operation, there are a plurality of setting patterns for a value such as the amount of movement, the extrusion interval, or the moving speed, depending on the type and preheating conditions of the cold iron source, and the automatic operation is performed by adopting an appropriate setting pattern. However, the preheating confirmation step is previously provided in this disclosure. Thus, the amount of supply and/or timing of supply of the cold iron source 15 can be changed as appropriate depending on whether the preheated iron source can be confirmed.

The "extrusion interval" refers to a time interval between the start of the movement of the extruder toward the melting chamber at one time and the start of the movement of the extruder toward the melting chamber at the next time, in order to repeatedly extrude the preheated iron source to supply it to the melting chamber.

As a preferred embodiment, if it can be confirmed that the cold iron source is a preheated iron source that has been preheated to the predetermined temperature, as a specific example, when the amount of change ΔQ in amount of sensible heat of the exhaust gas is equal to or more than the above preferred lower limit, the extruder interval of the extruder can be shortened to immediately supply the preheated iron source to the melting chamber. Similarly, the amount of movement of the extruder can be increased to promote the supply of the preheated iron source to the melting chamber. Conversely, if it cannot be confirmed that the cold iron source is a preheated iron source that has been preheated to the predetermined temperature, as a specific example, when the amount of change in amount of sensible heat of the exhaust gas is less than the above preferred lower limit, the extrusion interval and/or the amount of movement of the extruder may not be changed, or the extrusion interval may be increased and/or the amount of movement may be shortened to reduce the supply of the preheated iron source to the melting chamber.

When the preheated iron source can be confirmed to be at a predetermined temperature, the extrusion interval of the extruder is basically a constant 20-second interval. For example, when the amount of change ΔQ in amount of sensible heat of the exhaust gas is 5 % or more higher than a predetermined value, the extrusion interval of the extruder is preferably shortened by 10 % or more, and when the amount of change ΔQ in amount of sensible heat of the exhaust gas is 10 % or more higher than the predetermined value, the extrusion interval of the extruder is preferably shortened by 20 % or more.

As another preferred embodiment, if it can be confirmed that the cold iron source is a preheated iron source that has been preheated to the predetermined temperature, as a specific example, when the amount of change ΔQ in amount of sensible heat of the exhaust gas is equal to or more than the above preferred lower limit, the moving speed of the belt conveyor can be increased to immediately supply the preheated iron source to the melting chamber. Conversely, if it cannot be confirmed that the cold iron source is a preheated iron source that has been preheated to the predetermined temperature, as a specific example, when the amount of change in amount of sensible heat of the exhaust gas is less than the above preferred lower limit, the moving speed of the belt conveyor can be slowed down to reduce the supply of the preheated iron source to the melting chamber.

When the preheated iron source is confirmed to be at the predetermined temperature, the moving speed of the belt conveyor is operated at a constant moving speed of 1 m/min. For example, when the amount of change ΔQ in amount of sensible heat of the exhaust gas is 5 % or more higher than a predetermined value, the moving speed of the belt conveyor is preferably increased by 10 % or more, and when the amount of change ΔQ in amount of sensible heat of the exhaust gas is 10 % or more higher than the predetermined value, the moving speed of the belt conveyor is preferably increased by 20 % or more.

### [Melting step]

In the melting step, the preheated iron source supplied to the melting chamber in the supply step is melted by arc heating. The specific melting method is as described above for the electric furnace. The above mentioned electrode 6, oxygen blowing lance 7, carbon material blowing lance 8, and burner 9 can be suitably used for the melting step. The preheating confirmation step is previously provided in this disclosure. Thus, the preheated iron source that has been reliably preheated can be immediately supplied to the melting chamber, thereby reducing the electric power consumption required in the melting step.

### [Other Steps]

Examples of the other steps include a tapping step. In the tapping step, after the melting step, the molten iron 16 accumulated in the melting chamber 2 can be taken out of the electric furnace 1 via the tapping hole 12.

### EXAMPLES

The following is a specific description of this disclosure based on examples. The following examples present preferred examples of this disclosure and do not limit this disclosure in any way.

In an electric furnace 1 including a melting chamber 2, a preheating chamber 3, and a duct 20 with a thermometer 30 and a flowmeter 31, which are illustrated in FIG. 1, a cold iron source 15 was preheated to be a preheated iron source and the preheated iron source was further melted to produce molten iron 16, according to the following procedure. The equipment specifications of this electric furnace are presented below:
Molten iron capacity of melting room (amount of tapping): 130 tonnes;
Electric power: 50 Hz AC;
Transformer capacity: 75 MVA; and
Number of electrodes: 3.

A sheath type, K-type thermocouple having a tip diameter of 3.2 mm was used for the thermometer 30. The thermometer 30 was loaded such that the tip of the thermocouple was positioned to the center portion in the duct 20 by opening a dedicated flanged hole on the side surface of the duct 20. The sheath type thermocouple was covered with an alumina protective tube having a diameter of 32 mm, with its tip exposed only by about 3 mm in length, because it was assumed a problem that the sheath type thermocouple would be bent by the high temperature exhaust gas. From the outside of the furnace in the duct 20, digital data on the measured temperature was captured and recorded on a personal computer via a data recording and collection device (not illustrated) by means of the compensation lead wire connected to the thermometer 30.

The flowmeter 31, like the thermometer 30, was installed by loading a pitot tube through another dedicated flanged hole provided on the side surface of the duct 20. As a pitot tube, two tubes were loaded at the same position to measure dynamic and static pressures. The open face of the tube for static pressure measurement was installed such that the hole was located on the downstream side of the flow of the exhaust gas, while the open face of the tube for dynamic pressure measurement was installed such that the hole was located on the front side facing the flow of the exhaust gas. The pitot tube, like the thermocouple, is exposed to high temperature exhaust gas. Thus, the two tubes, one for dynamic pressure and the other for static pressure, each having a diameter of 12 mm and a material property of SUS316, were bundled and covered together with an alumina protective tube having a diameter of 32 mm except for its tip. From the outside of the furnace in the duct 20, digital data on the measured flow rate was captured and recorded on a personal computer via a data collection and recording device by means of the compensation lead wire connected to the flowmeter 31.

The obtained temperature and flow rate data were then used to calculate the amount of change ΔQ in amount of sensible heat of the exhaust gas.

A new monitor by which the amount of sensible heat of the exhaust gas and the amount of change thereof can be check at any time was prepared in a control room to allow an operator of the electric furnace to directly monitor them. Data on the amount of movement and the extrusion interval of the extruder 10 were transferred to an electrical control room, so that the operating parameters of the extruder 10 and the data on the amount of change in amount of sensible heat of the exhaust gas could be confirmed and controlled simultaneously.

### (Conventional Example)

Conventional Example is a reference example in which operation was performed within the normal range of the electric power consumption rate, with neither thermometer nor flowmeter used and no preheating confirmation step performed.

The temperature of the exhaust gas in the duct 20 during operation at a timing N is 198 °C, the flow rate of the exhaust gas is 58 Nm³/sec, and the amount of sensible heat of the exhaust gas per unit time per tonne of cold iron source weight in the preheating chamber is 418 kJ/(t•sec). Prior to this disclosure, the amount of sensible heat of the exhaust gas was not monitored, so no particular action was taken, and the operation was performed at 20-second intervals and with an amount of movement of the extruder 10 of 1000 mm. The ambient temperature of the exhaust gas 24 present in the melting chamber 2 where the molten iron 16 and the molten slag 17 are located averages around 1100 °C. If the temperature of the exhaust gas 24 in the upper portion of the preheating chamber 3 is sufficiently decreased, it is though that the sensible heat of the exhaust gas has been transferred to the cold iron source by the amount for the decreased temperature. However, the temperature of the exhaust gas 24 is constantly fluctuating. Thus, the electric power consumption rate, which is a major factor in operating costs, cannot be further reduced without monitoring the amount of sensible heat of the exhaust gas 24 calculated from the measured data of the thermometer 30 and flowmeter 31 as in this disclosure. The electric power consumption rate per channel at this assumption was 353 kWh/t.

### (Comparative Example 1)

Comparative Example 1 is an example in which a cold iron source was supplied to the melting chamber without being able to confirm that the cold iron source was a preheated iron source that had been preheated to the predetermined temperature (i.e., with insufficient preheating), based on the use of the thermometer and the flowmeter and the calculated amount of change ΔQ in amount of sensible heat of the exhaust gas.

That is, the temperature of the exhaust gas in the duct 20 during operation at a timing N is 201 °C, the flow rate of the exhaust gas is 58 Nm³/sec, and the amount of sensible heat of the exhaust gas per tonne of cold iron source weight and per unit time in the preheating chamber is 424 kJ/(t•sec). When this was left in place and no action was taken with the interval of the extruder 10 of the cold iron source at 20 seconds, the electric power consumption rate per channel was worse than assumed, 358 kWh/t.

### (Comparative Example 2)

Comparative Example 2 is an example where the interval of the extruder 10 of the cold iron source was overlooked without changing it because no confirmation was made without performing the preheating confirmation step, even though the cold iron source was a preheated iron source that had been preheated to the predetermined temperature, based on the use of the thermometer and the flowmeter and the calculated amount of change ΔQ in amount of sensible heat of the exhaust gas.

That is, the temperature of the exhaust gas in the duct 20 during operation at a timing N is 321 °C, the flow rate of the exhaust gas is 62 Nm³/sec, and the amount of sensible heat of the exhaust gas per tonne of cold iron source weight and per unit time in the preheating chamber is 718 kJ/(t•sec). When this was left in place and no action was taken with the interval of the extruder 10 of the cold iron source at 20 seconds, the electric power consumption rate per channel was worse than assumed, 367 kWh/t.

### (Comparative Example 3)

Comparative Example 3 is an example where the extrusion interval of the extruder 10 of the cold iron source was overlooked without changing it and the preheating was excess because no confirmation was made without performing the preheating confirmation step, even though the cold iron source was a preheated iron source that had been preheated to the predetermined temperature, based on the use of the thermometer and the flowmeter and the calculated amount of change ΔQ in amount of sensible heat of the exhaust gas.

That is, the temperature of the exhaust gas in the duct 20 during operation at a timing N is 578 °C, the flow rate of the exhaust gas is 69 Nm³/sec, and the amount of sensible heat of the exhaust gas per tonne of cold iron source weight and per unit time in the preheating chamber is 1441 kJ/(t•sec). When this was left in place and no action was taken with the interval of the extruder 10 of the cold iron source at 20 seconds, the electric power consumption rate per channel was much worse than assumed, 374 kWh/t.

### (Comparative Example 4)

Comparative Example 4 is an example in which the amount of sensible heat of the exhaust gas could not be calculated because only thermometer measurements were performed and no flowmeter measurement were performed, and the amount of change ΔQ in amount of sensible heat could not be ascertained. The result is another example where it took time to supply the preheated iron source to the melting chamber (i.e., excessive preheating).

That is, the temperature of the exhaust gas in the duct 20 during operation at a timing N is 244 °C. This is a case where the extrusion timing should have been accelerated to shorten the extrusion interval of the extruder 10 of the cold iron source. Therefore, the electric power consumption rate per channel was worse than assumed, 361 kWh/t.

### (Example 1)

Example 1 is an example in which it was confirmed that the cold iron source was a preheated iron source that had been preheated to the predetermined temperature, based on the use of the thermometer and the flowmeter and the calculated amount of change ΔQ in amount of sensible heat of the exhaust gas, and the extrusion interval of the extruder 10 was controlled to immediately supply the confirmed preheated iron source to the melting chamber.

That is, the temperature of the exhaust gas in the duct 20 during operation at a timing N is 211 °C, the flow rate of the exhaust gas is 55 Nm³/sec, which is almost the same as 49 Nm³/sec in Comparative Example 1, and the amount of sensible heat of the exhaust gas per cold iron source weight and per unit time in the preheating chamber is 418 kJ/(tesec). The amount of change in amount of sensible heat of the exhaust gas 24 is 1023 kJ/(t•sec), which is almost three times the value in Comparative Example 1. Therefore, the interval of the extruder 10 of the cold iron source was changed from 20 seconds to 15 seconds. As a result, the amount of sensible heat of the exhaust gas 24 was 332 kJ/(t•sec) as before. It was thought that the sensible heat of the exhaust gas had been transferred to the cold iron source side, and the electric power consumption rate per channel improved to 341 kWh/t.

### (Example 2)

Example 2 is another example in which it was confirmed that the cold iron source was a preheated iron source that had been preheated to the predetermined temperature, based on the use of the thermometer and the flowmeter and the calculated amount of change ΔQ in amount of sensible heat of the exhaust gas, and the extrusion interval of the extruder 10 was controlled to immediately supply the confirmed preheated iron source to the melting chamber.

That is, the temperature of the exhaust gas in the duct 20 during operation at a timing N is 574 °C, the flow rate of the exhaust gas is 67 Nm³/sec, and the amount of sensible heat of the exhaust gas per tonne of cold iron source weight and per unit time in the preheating chamber is 1394 kJ/(t•sec). This amount of sensible heat is larger than that in the conventional case, and the interval of the extruder 10 of the cold iron source was changed from 20 seconds to 12 seconds. As a result, the amount of sensible heat of the exhaust gas decreased to 969 kJ/(t•sec). It was thought that the heat of the gas had been transferred to the cold iron source side, and the electric power consumption rate per channel improved to 324 kWh/t.

### (Example 3)

Example 3 is another example in which it was confirmed that the cold iron source was a preheated iron source that had been preheated to the predetermined temperature, based on the use of the thermometer and the flowmeter and the calculated amount of change ΔQ in amount of sensible heat of the exhaust gas, and the extrusion interval of the extruder 10 was controlled to immediately supply the confirmed preheated iron source to the melting chamber.

That is, the temperature of the exhaust gas in the duct 20 during operation at a timing N is 164 °C, the flow rate of the exhaust gas is 49 Nm³/sec, and the amount of sensible heat of the exhaust gas per tonne of cold iron source weight and per unit time in the preheating chamber is 293 kJ/(t•sec). While this was left in place, the interval of the extruder 10 of the cold iron source was shortened from 20 seconds to 15 seconds. As a result, the electric power consumption rate per channel was slightly improved than assumed, 349 kWh/t. This is an example where, when the variation in amount of sensible heat is too large, the cold iron source melts and crimps in the preheating section, which makes it difficult for the exhaust gas to flow and partially weakens the preheating, but the effect of heat energy transfer is sufficiently large. However, this was an example that indicates the upper limit of ΔQ.

**Table 1**

| | Meas. timing | Weight W of cold iron source in preheating chamber (t) | Specific heat c of exhaust gas (kJ/ (Nm^{3•}°C)) | Temp. T of exhaust gas (°C) | Flow velocity v of exhaust gas (m/sec) | Duct area S (m²) | Flow rate F of exhaust gas (Nm³/ sec) | Amount of sensible heat of exhaust gas = cFT (MJ/sec) | Amount of sensible heat Q of exhaust gas per weight of cold iron source = (cFT)/W (kJ/(sec•t)) | Timing N | | | After timing N | | | | | | Electric power consumption rate per charge (kWh/t) | Compre -hensive evaluation |
|---|---|---|---|---|---|---|---|---|---|---|---|---|---|---|---|---|---|---|---|---|
| | | | | | | | | | | Extrusion interval of cold iron source (sec) | Amount of change ΔQ in amount of sensible heat = \|Q₁ - Q_{N}\| (kJ/(sec•t)) | Preheating confirmation step | Extrusion interval of cold iron source (sec) | Temp. T of exhaust gas (°C) | Flow velocity v of exhaust gas (m/sec) | Amount of sensible heat Q of exhaust gas per weight of cold iron source= (cFT)/W (kJ/(sec•t)) | Amount of change ΔQ in amount of sensible heat = \|QN - QN+1\| (kJ/(sec•t)) | Supply step | | |
| Conv. Ex. | *1 | 36 | 1.302 | 341 | 35 | 1.767 | 62 | 27 | 763 | 20 | Not calculated | Not implemented | 20 | 201 | 32 | 411 | Not calculated | Implemented without preheating confirmation step | 353 | - |
| | *N | 36 | 1.302 | 198 | 33 | 1.767 | 58 | 15 | 418 | | | | | | | | | | | |
| Comp. Ex. 1 | *1 | 36 | 1.302 | 341 | 35 | 1.767 | 62 | 27 | 763 | 20 | 339 | Unable to confirm to be preheated iron source | 20 | 204 | 33 | 430 | -6 | Supplied with unable to confirm to be preheated iron source | 358 | Poor |
| | *N | 36 | 1.302 | 201 | 33 | 1.767 | 58 | 15 | 424 | | | | | | | | | | | |
| Comp. Ex. 2 | *1 | 36 | 1.302 | 578 | 39 | 1.767 | 69 | 52 | 1,441 | 20 | 723 | Not implemented (unconfirmed to be preheated iron source) | 20 | 315 | 35 | 705 | 13 | Delay in supply timing of preheated iron source despite having been actually preheated, because of being unconfirmed to be preheated iron source | 367 | Poor |
| | *N | 36 | 1.302 | 321 | 35 | 1.767 | 62 | 26 | 718 | | | | | | | | | | | |
| Comp. Ex. 3 | *1 | 36 | 1.302 | 823 | 41 | 1.76-,, | 72 | 78 | 2,156 | 20 | 716 | Not implemented (unconfirmed to be preheated iron source) | 20 | 586 | 38 | 1,423 | 18 | Delay in supply timing of preheated iron source despite having been actually preheated, because of being unconfirmed to be preheated iron source | 374 | Poor |
| | *N | 36 | 1.302 | 578 | 39 | 1.767 | 69 | 52 | 1,441 | | | | | | | | | | | |

| | | | | | | | | | | | | | | | | | | | | |
|---|---|---|---|---|---|---|---|---|---|---|---|---|---|---|---|---|---|---|---|---|
| *1: Timing when the cold iron source is fed into the preheating chamber *N: Any timing after the timing when the cold iron source is fed into the preheating chamber | | | | | | | | | | | | | | | | | | | | |

**Table 1 (continued)**

| | Meas. timing | Weight W of cold iron source in preheating chamber (t) | Specific heat c of exhaust gas (kJ/ (Nm^{3•}°C)) | Temp. T of exhaust gas (°C) | Flow velocity v of exhaust gas (m/sec) | Duct area S (m²) | Flow rate F of exhaust gas (Nm³/ sec) | Amount of sensible heat of exhaust gas = cFT (MJ/sec) | Amount of sensible heat Q of exhaust gas per weight of cold iron source = (cFT)/W (kJ/(sec•t)) | Timing N | | | After timing N | | | | | | Electric power consumption rate per charge (kWh/t) | Compre -hensive evaluation |
|---|---|---|---|---|---|---|---|---|---|---|---|---|---|---|---|---|---|---|---|---|
| | | | | | | | | | | Extrusion interval of cold iron source (see) | Amount of change ΔQ in amount of sensible heat = \|Q₁ - Q_{N}\| (kJ/(sec•t)) | Preheating confirmation step | Extrusion interval of cold iron source (sec) | Temp. T of exhaust gas (°C) | Flow velocity v of exhaust gas (m/sec) | Amount of sensible heat Q of exhaust gas per weight of cold iron source = (cFT)/W (kJ/(sec•t)) | Amount of change ΔQ in amount of sensible heat = \|QN - QN+1\| (kJ/(sec•t)) | Supply step | | |
| Comp. Ex.4 | *1 | 36 | 1.302 | 379 | Not measured | 1.767 | Unable to calculate | Unable to calculate | Unable to calculate | 20 | Unable to calculate | Not implemented | 20 | 244 | Not measured | Unable to calculate | Unable to calculate | Implemented without preheating confirmation step because amount of sensible heat cannot be calculated | 361 | Poor |
| | *N | 36 | 1.302 | 241 | | 1.767 | | | | | | | | | | | | | | |
| Ex.1 | *1 | 36 | 1.302 | 578 | 39 | 1.767 | 69 | 52 | 1,441 | 20 | 1,023 | Confirmed to be preheated iron source | 15 | 173 | 30 | 332 | 86 | Immediately supply preheated iron source confirmed to be preheated | 341 | Good |
| | *N | 36 | 1.302 | 211 | 31 | 1.767 | 55 | 15 | 418 | | | | | | | | | | | |
| Ex.2 | *1 | 36 | 1.302 | 841 | 43 | 1.767 | 76 | 83 | 2,311 | 20 | 917 | Confirmed to be preheated iron source | 12 | 399 | 42 | 1,071 | 323 | Immediately supply preheated iron source confirmed to be preheated | 324 | Good |
| | *N | 36 | 1.302 | 574 | 38 | 1.767 | 67 | 50 | 1,394 | | | | | | | | | | | |
| Ex.3 | *1 | 36 | 1.302 | 612 | 38 | 1.767 | 67 | 54 | 1,486 | 20 | 1,193 | Confirmed to be preheated iron source | 15 | 135 | 28 | 242 | 52 | Immediately supply preheated iron source because preheating was not confirmed | 349 | Slightly good |
| | *N | 36 | 1.302 | 164 | 28 | 1.767 | 49 | 11 | 293 | | | | | | | | | | | |

| | | | | | | | | | | | | | | | | | | | | |
|---|---|---|---|---|---|---|---|---|---|---|---|---|---|---|---|---|---|---|---|---|
| *1: Timing when the cold iron source is fed into the preheating chamber *N: Any timing after the timing when the cold iron source is fed into the preheating chamber | | | | | | | | | | | | | | | | | | | | |

In Table 1, the electric power consumption rate per charge consumed in the conventional example was used as a standard. A reduction of more than 5 kWh/t of the electric power consumption rate was considered good; a reduction of more than 0 kWh/t and 5 kWh/t or less was considered slightly good; and the same as or an increase from the above standard was considered poor. In other words, the case where the electric power consumption rate could be lower than the above standard was determined to be effective.

As is clear from the above description, in the examples where it is confirmed that the cold iron source has become a preheated iron source and the confirmed preheated iron source is immediately supplied to the melting chamber, the electric power consumption rate, which is a major part of the production cost, can be significantly improved, and the effect is significantly large. This can be attributed to the fact that in the examples, the preheated iron source obtained by efficiently preheating the cold iron source could be sent to the melting step, which shortened the melting time of the preheated iron source and the time for tapping.

### REFERENCE SIGNS LIST

- 1: electric furnace
- 2: melting chamber
- 3: preheating chamber
- 4: furnace wall
- 5: furnace lid
- 6: electrode
- 7: oxygen blowing lance
- 8: carbon material blowing lance
- 9: burner
- 10: extruder
- 12: tapping hole
- 13: slag hole
- 14: supply bucket
- 15: cold iron source
- 16: molten iron
- 17: molten slag
- 18: arc
- 19: cold iron source supply port
- 20: duct
- 21: tapping door
- 22: slag door
- 23: traveling cart
- 24: exhaust gas
- 30: thermometer
- 31: flowmeter

## Claims

1. A method of producing molten iron (16) in an electric furnace (1) having a preheating chamber (3) and a melting chamber (2), the method comprising:
a cold iron source feeding step of feeding a cold iron source (15) into the preheating chamber (3);
a cold iron source preheating step of preheating the cold iron source (15) fed in the cold iron source feeding step to a predetermined temperature by an exhaust gas (24) generated in the melting chamber (2) to be a preheated iron source,
wherein the cold iron source preheating step includes a preheating confirmation step to confirm that the cold iron source (15) is a preheated iron source that has been preheated to the predetermined temperature;
a supply step of supplying the preheated iron source that has been confirmed to be preheated to the predetermined temperature in the preheating confirmation step to the melting chamber (2); and
a melting step of melting the preheated iron source supplied to the melting chamber (2) in the supply step by arc heating, **characterized in that**
the confirmation in the preheating confirmation step that the cold iron source (15) is a preheated iron source that has been preheated to the predetermined temperature is performed based on an amount of change in amount of sensible heat of the exhaust gas (24) and that the cold iron source (15) is determined to be a preheated iron source that has been preheated to the predetermined temperature when the amount of change in amount of sensible heat calculated according to the following formula (1) is 700 kJ/(sec•t) or more: $\begin{matrix}ΔQ = \left|{Q}_{1}-{Q}_{N}\right| \\ = \left|\left\{\left(c\times {F}_{1}\times {T}_{1}\right)/{W}_{1}\right\}-\left\{\left(c\times {F}_{N}\times {T}_{N}\right)/{W}_{N}\right\}\right|\end{matrix}$ wherein
ΔQ is an amount of change in amount of sensible heat of the exhaust gas (24) [kJ/(sec•t)];
Q₁ is an amount of sensible heat of the exhaust gas (24) at the timing when the cold iron source (15) is fed into the preheating chamber (3) [kJ/(sec•t)];
Q_{N} is an amount of sensible heat of the exhaust gas (24) at any timing N after the timing when the cold iron source (15) is fed into the preheating chamber (3), which is continuously calculated [kJ/(sec•t)];
c is a specific heat of the exhaust gas (24) [kJ/(m³•°C)];
F₁ is a flow rate of the exhaust gas (24) at the timing when the cold iron source (15) is fed into the preheating chamber (3) [m³/sec];
F_{N} is a flow rate of the exhaust gas (24) at any timing N after the timing when the cold iron source (15) is fed into the preheating chamber (3), which is continuously measured [m³/sec];
T₁ is a temperature of the exhaust gas (24) at the timing when the cold iron source (15) is fed into the preheating chamber (3) [°C];
T_{N} is a temperature of the exhaust gas (24) at any timing N after the timing when the cold iron source (15) is fed into the preheating chamber (3), which is continuously measured [°C];
W₁ is a weight of the cold iron source (15) in the preheating chamber (3) at the timing when the cold iron source (15) is fed into the preheating chamber (3) [t]; and
W_{N} is a weight of the cold iron source (15) in the preheating chamber (3) at any timing N after the timing when the cold iron source (15) is fed into the preheating chamber (3) [t].

2. The method of producing molten iron (16) according to claim 1, wherein the amount of change in amount of sensible heat is calculated based on continuously measured temperature and flow rate of the exhaust gas (24) and a weight of the cold iron source (15) fed into the preheating chamber (3).

3. The method of producing molten iron (16) according to claim 1 or 2, wherein the supply of the preheated iron source to the melting chamber (2) in the supply step is performed by an extruder (10).

4. The method of producing molten iron (16) according to any one of claims 1 to 3, wherein the supply of the preheated iron source to the melting chamber (2) in the supply step is performed by free fall from a belt conveyor.

## Patentansprüche

1. Verfahren zum Herstellen von geschmolzenem Eisen (16) in einem Elektroofen (1) mit einer Vorwärmkammer (3) und einer Schmelzkammer (2), wobei das Verfahren umfasst:
einen Schritt zum Einbringen einer kalten Eisenquelle des Einbringens einer kalten Eisenquelle (15) in die Vorwärmkammer (3),
einen Schritt zum Vorwärmen der kalten Eisenquelle des Vorwärmens der kalten Eisenquelle (15), die im Schritt zum Einbringen einer kalten Eisenquelle zugeführt wurde, durch ein in der Schmelzkammer (2) erzeugtes Abgas (24) auf eine vorbestimmte Temperatur, um eine vorwärmte Eisenquelle darzustellen,
wobei der Schritt zum Vorwärmen der kalten Eisenquelle einen Schritt zur Bestätigung des Vorwärmens umfasst, um zu bestätigen, dass die kalte Eisenquelle (15) eine vorgewärmte Eisenquelle ist, welche auf die vorbestimmte Temperatur vorgewärmt wurde,
einen Zuführungsschritt des Zuführens der vorgewärmten Eisenquelle, bei der im Schritt zur Bestätigung des Vorwärmens bestätigt wurde, dass sie auf die vorbestimmte Temperatur vorgewärmt wurde, in die Schmelzkammer (2), und
einen Schmelzschritt des Schmelzens der vorgewärmten Eisenquelle, die im Zuführungsschritt der Schmelzkammer (2) zugeführt wurde, durch Lichtbogenerwärmung, **dadurch gekennzeichnet, dass**
die Bestätigung im Schritt zur Bestätigung des Vorwärmens, dass die kalte Eisenquelle (15) eine vorgewärmte Eisenquelle ist, welche auf die vorbestimmte Temperatur vorgewärmt wurde, auf der Grundlage einer Änderungsmenge der fühlbaren Wärmemenge des Abgases (24) erfolgt und dass festgelegt wird, dass die kalte Eisenquelle (15) eine vorgewärmte Eisenquelle ist, welche auf die vorbestimmte Temperatur vorgewärmt wurde, wenn die gemäß der folgenden Formel (1) berechnete Änderungsmenge der fühlbaren Wärmemenge 700 kJ/(sec•t) oder mehr beträgt: $\begin{matrix}ΔQ = \left|{Q}_{1}-{Q}_{N}\right| \\ = \left|\left\{\left(c\times {F}_{1}\times {T}_{1}\right)/{W}_{1}\right\}-\left\{\left(c\times {F}_{N}\times {T}_{N}\right)/{W}_{N}\right\}\right|\end{matrix}$
wobei
ΔQ eine Änderungsmenge der fühlbaren Wärmemenge des Abgases (24) [kJ/(sec•t)] ist,
Q₁ eine Menge von fühlbarer Wärme des Abgases (24) zu dem Zeitpunkt, zu dem die kalte Eisenquelle (15) in die Vorwärmkammer (3) zugeführt wird, ist [kJ/(sec•t)],
Q_{N} eine Menge von fühlbarer Wärme des Abgases (24) zu einem beliebigen Zeitpunkt N nach dem Zeitpunkt, zu dem die kalte Eisenquelle (15) in die Vorwärmkammer (3) zugeführt wird, ist, welche kontinuierlich berechnet wird [kJ/(sec•t)],
c eine spezifische Wärme des Abgases (24) ist [kJ/(m³•°C)],
F₁ eine Durchflussrate des Abgases (24) zu dem Zeitpunkt, zu dem die kalte Eisenquelle (15) in die Vorwärmkammer (3) zugeführt wird, ist [m³/s],
F_{N} eine Durchflussrate des Abgases (24) zu einem beliebigen Zeitpunkt N nach dem Zeitpunkt, zu dem die kalte Eisenquelle (15) in die Vorwärmkammer (3) zugeführt wird, ist, welche kontinuierlich gemessen wird, [m³/s],
T₁ eine Temperatur des Abgases (24) zu dem Zeitpunkt, zu dem die kalte Eisenquelle (15) in die Vorwärmkammer (3) zugeführt wird, ist [°C],
Tₙ eine Temperatur des Abgases (24) zu einem beliebigen Zeitpunkt N nach dem Zeitpunkt, zu dem die kalte Eisenquelle (15) in die Vorwärmkammer (3) zugeführt wird, ist, welche kontinuierlich gemessen wird [°C],
W₁ ein Gewicht der kalten Eisenquelle (15) in der Vorwärmkammer (3) zu dem Zeitpunkt, zu dem die kalte Eisenquelle (15) in die Vorwärmkammer (3) zugeführt wird, ist [t] und
W_{N} ein Gewicht der kalten Eisenquelle (15) in der Vorwärmkammer (3) zu einem beliebigen Zeitpunkt N nach dem Zeitpunkt, zu dem die kalte Eisenquelle (15) in die Vorwärmkammer (3) zugeführt wird, ist [t].

2. Verfahren zum Herstellen von geschmolzenem Eisen (16) gemäß Anspruch 1, wobei die Änderungsmenge von fühlbarer Wärme auf der Grundlage der kontinuierlich gemessenen Temperatur und Durchflussrate des Abgases (24) und eines Gewichts der in die Vorwärmkammer (3) zugeführten kalten Eisenquelle (15) berechnet wird.

3. Verfahren zum Herstellen von geschmolzenem Eisen (16) gemäß Anspruch 1 oder 2, wobei die Zufuhr der vorgewärmten Eisenquelle in die Schmelzkammer (2) im Zuführungsschritt durch einen Extruder (10) erfolgt.

4. Verfahren zum Herstellen von geschmolzenem Eisen (16) gemäß Anspruch 1 bis 3, wobei die Zufuhr der vorgewärmten Eisenquelle in die Schmelzkammer (2) im Zuführungsschritt durch freien Fall von einem Förderband erfolgt.

## Revendications

1. Procédé de fabrication de fonte liquide (16) dans un four électrique (1) pourvu d'une chambre de préchauffage (3) et d'une chambre de fusion (2), le procédé comprenant :
une étape d'introduction de source de fer froide consistant à introduire une source de fer froide (15) dans la chambre de préchauffage (3) ;
une étape de préchauffage de source de fer froide consistant à préchauffer, à une température prédéterminée, la source de fer froide (15) introduite lors de l'étape d'introduction de source de fer froide à l'aide d'un gaz effluent (24) produit dans la chambre de fusion (2) pour obtenir une source de fer préchauffée,
dans lequel l'étape de préchauffage de la source de fer froide comporte une étape de confirmation de préchauffage afin de confirmer que la source de fer froide (15) est une source de fer préchauffée qui a été préchauffée à la température prédéterminée ;
une étape de fourniture consistant à fournir la source de fer préchauffée qui a été confirmée comme étant préchauffée à la température prédéterminée lors de l'étape de confirmation de préchauffage à la chambre de fusion (2) ; et
une étape de fusion consistant à faire fondre la source de fer préchauffée fournie à la chambre de fusion (2) lors de l'étape de fourniture par chauffage à l'arc, **caractérisé en ce que**
la confirmation lors de l'étape de confirmation de préchauffage du fait que la source de fer froide (15) est une source de fer préchauffée qui a été préchauffée à la température prédéterminée est effectuée sur la base d'une variation d'une quantité de chaleur sensible du gaz effluent (24) et du fait qu'il est déterminé que la source de fer froide (15) est une source de fer préchauffée qui a été préchauffée à la température prédéterminée lorsque la variation de la quantité de chaleur sensible calculée selon la formule (1) suivante est de 700 kJ/(sec•t) ou plus : $\begin{matrix}ΔQ = \left|{Q}_{1}-{Q}_{N}\right| \\ = \left|\left\{\left(c\times {F}_{1}\times {T}_{1}\right)/{W}_{1}\right\}-\left\{\left(c\times {F}_{N}\times {T}_{N}\right)/{W}_{N}\right\}\right|\end{matrix}$ où
ΔQ est une variation de la quantité de chaleur sensible du gaz effluent (24) [kJ/(sec•t)] ;
Q₁ est une quantité de chaleur sensible du gaz effluent (24) au moment où la source de fer froide (15) est introduite dans la chambre de préchauffage (3) [kJ/(sec•t)] ;
Q_{N} est une quantité de chaleur sensible du gaz effluent (24) à un quelconque moment N après le moment où la source de fer froide (15) est introduite dans la chambre de préchauffage (3), qui est calculée en continu [kJ/(sec•t)] ;
c est une chaleur spécifique du gaz effluent (24) [kJ/(m³•°C)] ;
F₁ est un débit du gaz effluent (24) au moment où la source de fer froide (15) est introduite dans la chambre de préchauffage (3) [m³/sec] ;
F_{N} est un débit du gaz effluent (24) à un quelconque moment N après le moment où la source de fer froide (15) est introduite dans la chambre de préchauffage (3), qui est mesuré en continu [m³/sec] ;
T₁ est une température du gaz effluent (24) au moment où la source de fer froide (15) est introduite dans la chambre de préchauffage (3) [°C] ;
T_{N} est une température du gaz effluent (24) à un quelconque moment N après le moment où la source de fer froide (15) est introduite dans la chambre de préchauffage (3), qui est mesurée en continu [°C] ;
W₁ est une masse de la source de fer froide (15) dans la chambre de préchauffage (3) au moment où la source de fer froide (15) est introduite dans la chambre de préchauffage (3) [t] ; et
W_{N} est une masse de la source de fer froide (15) dans la chambre de préchauffage (3) à un quelconque moment N après le moment où la source de fer froide (15) est introduite dans la chambre de préchauffage (3) [t].

2. Procédé de production de fonte liquide (16) selon la revendication 1, dans lequel la variation de quantité de chaleur sensible est calculée sur la base de la température et du débit mesurés en continu du gaz effluent (24) et d'une masse de la source de fer froide (15) introduite dans la chambre de préchauffage (3).

3. Procédé de production de fonte liquide (16) selon la revendication 1 ou 2, dans lequel la fourniture de la source de fer préchauffée à la chambre de fusion (2) lors de l'étape de fourniture est effectuée par une extrudeuse (10).

4. Procédé de production de fonte liquide (16) selon l'une quelconque des revendications 1 à 3, dans lequel la fourniture de la source de fer préchauffée à la chambre de fusion (2) lors de l'étape de fourniture s'effectue par gravité à partir d'un convoyeur à bande.
